# EUROPÄISCHE PATENTSCHRIFT

(11) **EP 0 384 162 B1**
(45) Veröffentlichungstag und Bekanntmachung des Hinweises auf die Patenterteilung: **14.04.1993**
(21) Anmeldenummer: 90101672.5
(22) Anmeldetag: 28.01.1990
(51) Int. Cl.: C02F 11/02

(54) **Verfahren zur Entseuchung und aeroben Stabilisierung von Klärschlamm**
Process for the disinfection and aerobic stabilisation of sewage sludge
Procédé de désinfection et de stabilisation aérobie de boues d'épuration

(30) Priorität: 21.02.1989 DE 3905228; 31.08.1989 DE 3928846
(43) Veröffentlichungstag der Anmeldung: 29.08.1990
(73) Patentinhaber: Fuchs, Leonhard, Dipl.-Ing., D-56727 Mayen (DE); Fuchs, Martin, D-56727 Mayen (DE)
(72) Erfinder: Fuchs, Leonhard, Dipl.-Ing., D-56727 Mayen (DE); Fuchs, Martin, D-56727 Mayen (DE)
(74) Vertreter: Werner, Hans-Karsten, Dr.Dipl.-Chem.

(56) Entgegenhaltungen:
- EP-A- 0 157 317
- DE-A- 3 240 009
- GB-A- 2 105 318
- G.W.F. - WASSER/ABWASSER, Band 127, Nr. 9, September 1986, Seiten 442-448, München, DE; K. BREITENBÜCHER: "Neue Einsatzbereiche für aerob-thermophile Prozesse zur Stabilisierung und Entseuchung von Abwasserschlämmen mit Bioenergienutzung"

## Beschreibung

Gegenstand der vorliegenden Erfindung ist ein Verfahren zur Entseuchung und aeroben Stabilisierung von eingedicktem Klärschlamm in mehreren Stufen, bestehend aus einem oder mehreren wärmeisolierten, vorzugsweise gerührten Behältern, unter Zufuhr von sauerstoffhaltigem Gas.

Ein gattungsgemäßes Verfahren ist beschrieben beispielsweise in "Korrespondenz Abwasser", 29. Jahrgang, 1982, Seite 203 bis 207. Bei diesem Verfahren wird der anfallende Rohschlamm nach statischer Eindickung in zwei hintereinandergeschalteten, wärmegedämmten Reaktoren bei gleichzeitig intensiver Durchmischung belüftet. Im Reaktor I schwankt die Temperatur überwiegend um den oberen mesophilen Bereich herum, während im Reaktor II ständig thermophile Temperaturen (über 45°C) eingehalten werden. Bei ausreichend langen Verweilzeiten jeder Charge im Reaktor II und Einhaltung von Temperaturen über 50°C findet dort die Entseuchung statt. Das Absetzverhalten des behandelten Schlammes ist gegenüber dem Rohschlamm meist nur unwesentlich verbessert. Auch die Qualität des anfallenden Trübwassers, welches im allgemeinen in die biologische Abwasserreinigung zurückgeführt wird, ist oft unbefriedigend. Der nach dem bekannten Verfahren aerob stabilisierte und entseuchte Klärschlamm wurde in der Vergangenheit im erheblichen Umfang als Düngemittel eingesetzt. Diese Verwendung wurde jedoch durch neuere Verordnungen und Vorschriften eingeschränkt, so daß der anfallende Klärschlamm zukünftig vielfach deponiert oder verbrannt werden muß. Dann ist es von besonderer Bedeutung, daß sich der behandelte Klärschlamm gut eindicken und entwässern läßt und daß dabei ein Trübwasser anfällt, welches eine geringe Restverschmutzung aufweist.

Die Erfindung hat sich somit die Aufgabe gestellt, ein Verfahren zur Entseuchung und aeroben Stabilisierung von eingedicktem Klärschlamm in mehreren Stufen, bestehend aus einem oder mehreren wärmeisolierten, vorzugsweise gerührten Behältern, unter Zufuhr von sauerstoffhaltigem Gas zu entwickeln, welches sicher und zuverlässig arbeitet, einwandfrei entseucht und stabilisiert, und zwar auch bei schwankendem Anfall an Rohschlamm und schwankenden Temperaturen des Rohschlamms und/oder der Umgebung, unzumutbare Geruchsbelästigungen vermeidet, kostenmäßig mit bisherigen Verfahren vergleichbar ist, und dabei einen gut absetzbaren Schlamm liefert mit nur gering belastetem Trübwasser.

Diese Aufgabe kann überraschend einfach und zuverlässig dadurch gelöst werden, daß
a) der anfallende auf mindestens 2 % TS eingedickte Rohschlamm, gegebenenfalls unter Vorwärmung, danach allein durch aeroben Abbau ohne Zufuhr von Fremdwärme innerhalb von 2 bis 4 Tagen bis an den thermophilen Temperaturbereich von > 50°C gebracht,
b) durch weiteren aeroben Abbau ohne Zufuhr von Fremdwärme von mindestens 20 Stunden bei 50 bis 55°C oder mindestens 10 Stunden bei > 55°C entseucht und
c) durch aktives Abkühlen auf 25 bis 45°C und weiteren aeroben Abbau innerhalb von 2 bis 8 Tagen, vorzugsweise innerhalb von 3 bis 5 Tagen, mesophil stabilisiert wird.

Bei der einfachsten Ausführungsform des Verfahrens können die Stufen a), b) und c) im gleichen Behälter durchgeführt werden. Um gegebenenfalls den eingedickten Rohschlamm vorzuwärmen, vor allem aber um am Ende der Stufe b) und vor Beginn der Stufe c) die Wärme abzuführen und dadurch aktiv abzukühlen, sollte dieser Behälter mit einem Wärmeaustauscher versehen werden, beispielsweise durch Rohrschlangen oder durchspülbare Plattenkühler.

Ansonsten handelt es sich um ein Eintopfverfahren, bei dem praktisch alle drei Stufen hintereinander im gleichen Behälter durchgeführt werden. Insbesondere um die am Ende der Stufe b) abzuführende Wärme sinnvoll zu nutzen und zum anderen die Flexibilität des Verfahrens zu erhöhen, kann dieses Eintopfverfahren dahingehend erweitert werden, daß zwei oder mehr Chargen in zwei oder mehr Behältern zeitlich so versetzt gefahren werden, daß die bei Beginn der Stufe c) einer vorhergehenden Charge anfallende Wärmemenge verwendet wird zur Vorwärmung des eingedickten Rohschlamms der Stufe a) einer nachfolgenden Charge.

Sobald die Größe der Gesamtanlage und die geforderte Flexibilität es sinnvoll erscheinen läßt, drei oder mehrere Behälter zur Verfügung zu stellen, bietet sich eine andere, besonders einfache und wirtschaftliche Ausführungsform des Verfahrens an, bei der die Stufen a), b) und c) in drei getrennten hintereinander geschalteten Stufen A, B und C stattfinden, wobei die Behälter der Stufen B und C ein Mehrfaches des Behälters der Stufe A aufnehmen können.

Die Erwärmung des Rohschlamms der Stufe A erfolgt im allgemeinen durch Wärmeaustausch mit dem Schlamm der Stufe C. Es ist jedoch durchaus möglich, die Erwärmung des Rohschlamms der Stufe A durch Wärmeaustausch mit dem Schlamm der Stufe B vorzunehmen. Schließlich kann gewünschtenfalls auch noch dem Ablauf aus der Stufe C Wärme entzogen werden.

Es hat sich nämlich gezeigt, daß im Normalbetrieb in der Stufe C mehr Wärme entsteht und abgeführt werden muß als zur Erwärmung des eingedickten Rohschlamms in der Stufe A notwendig ist. Wärmemengen der Stufe C, die über den Bedarf der Stufe A hinausgehen, werden daher durch Wärmeaustausch abgeführt und können gewünschtenfalls anderweitig nutzbringend verwertet werden.

Selbstverständlich ist es möglich, den Wärmebedarf der Stufe A teilweise auch durch Wärmeaustausch mit dem Schlamm der Stufe B zu decken. Nach erfolgter Entseuchung des Schlamms in der Stufe B kann nämlich vor einem neuen Beschickungsvorgang Wärme aus der Stufe B auf die Stufe A übertragen werden, um dort die Temperatur weiter zu erhöhen. Weiter besteht die Möglichkeit, den Temperaturbedarf der Stufe A und der Stufe B hilfsweise durch andere Wärmequellen zu decken. Diese Möglichkeit der Erwärmung durch andere Wärmequellen ist insbesondere für den Fall in Erwägung zu ziehen, daß durch Störungen in der Mikrobiologie etc. zunächst einmal wieder optimale Temperaturverhältnisse in den Stufen geschaffen werden müssen.

Die Temperatur in der Stufe A muß erfindungsgemäß vor der Überführung einer Charge in die Stufe B mindestens 25°C betragen. Temperaturen über 45°C treten in der Stufe A selten auf, da selbst bei stärkerer Belüftung der Stufe A der Temperaturanstieg durch aeroben Abbau nicht so rasch erfolgt, daß die Maximaltemperaturen der Stufe C wesentlich überschritten werden. Die Beschickung der Stufe A kann chargenweise oder kontinuierlich erfolgen. Vorzugsweise wird auch die Stufe A gerührt und begast, jedoch ist dies nicht unbedingt erforderlich.

In der Stufe B erfolgt hingegen der aerobe Abbau so stark, daß mit Sicherheit Temperaturen über 50°C erzeugt werden. Bei Temperaturen zwischen 50 und 70°C ist bei entsprechenden Verweilzeiten die Entseuchung sicher gewährleistet. Die Zeit zwischen zwei Beschickungszyklen kann erfindungsgemäß somit von der Temperatur in der Stufe B abhängig gemacht werden. Bei 50°C reicht eine Zeit zwischen zwei Beschickungszyklen von einem Tag aus. Bei Temperaturen über 65°C reicht sogar eine Zeit zwischen zwei Beschickungszyklen von drei Stunden zur einwandfreien Entseuchung. Vorsichtshalber sollte jedoch im allgemeinen 10 Stunden entseucht werden. Die Temperatur in der Stufe B kann durch den Umfang der Sauerstoffzufuhr beeinflußt werden. Sie kann darüber hinaus abhängig gemacht werden von der zur Verfügung stehenden Zeit zwischen zwei Beschickungszyklen. Bei verstärktem Anfall von eingedicktem Rohschlamm kann somit nicht nur die Chargengröße erhöht werden, sondern auch die Verweilzeit des Schlamms in den Stufen A, B und C verkürzt werden, indem die Temperatur in der Stufe B erhöht wird. Diese Flexibilität ist ein zusätzlicher Vorteil, der die Einsatzmöglichkeiten des erfindungsgemäßen Verfahrens weiter erhöht. Darüber hinaus kann der Anfall schwankender Mengen an eingedicktem Rohschlamm ausgeglichen werden durch entsprechende Anpassung des Füllstandes in den Behältern sowie gegebenenfalls Zu- und Abschaltung von parallelen oder in Reihe geschalteten zusätzlichen Behältern für die jeweilige Stufe.

In der Stufe C wird die Temperatur auf 25 bis 45°C, vorzugsweise etwa 35°C, gesenkt. Bei diesen Temperaturen entsteht ein Schlamm mit besonders gutem Absetzverhalten und ein niedrig belastetes Trübwasser.

Die mittlere Verweilzeit des Schlammes beträgt im allgemeinen in der Stufe A 0,25 bis 2,5 Tage, vorzugsweise etwa einen Tag, in der Stufe B 1 bis 6 Tage, vorzugsweise 2 bis 3 Tage, und in der Stufe C 1 bis 8 Tage, vorzugsweise 3 bis 4 Tage.

Als Eingangsmaterial für das erfindungsgemäße Verfahren wird insbesondere eingedickter Klärschlamm verwendet, wie er aus der mechanischen und/oder biologischen Reinigung häuslicher und/oder industrieller Abwässer anfällt, wobei durch statische oder maschinelle Eindickung ein Feststoffgehalt von 2 bis 8 % erzielt wird. Derartige eingedickte Klärschlämme weisen im allgemeinen einen ausreichenden Nährstoffgehalt für den exothermen aeroben Abbau in der Stufe B auf, besitzen aber auch noch leicht handhabbare rheologische Eigenschaften. Insbesondere beim Eintopfverfahren und wenn auf eine Vorwärmung des eingedickten Rohschlamms verzichtet werden soll, empfiehlt es sich, den Feststoffgehalt des Rohschlamms auf mindestens 3 % TS, vorzugsweise sogar 4 bis 8 % TS, zu erhöhen. Bei diesen höheren Feststoffgehalten setzt der aerobe Abbau ausreichend rasch und stark ein, so daß innerhalb der gewünschten Zeit von 2 bis 4 Tagen der thermophile Temperaturbereich erreicht wird. Beim mehrstufigen Verfahren mit Vorwärmung in der Stufe A ist es hingegen durchaus möglich, auch mit verdünnterem Rohschlamm von nur 2 % TS zu arbeiten.

Die Zufuhr von sauerstoffhaltigem Gas erfolgt im allgemeinen durch Belüften. In besonderen Fällen kann auch mehr oder weniger reiner Sauerstoff zugefügt werden. Sauerstoffhaltige Gase mit einem Sauerstoffgehalt unter 15 % kommen ebenfalls nur ausnahmsweise in Frage, da die Sauerstoffzufuhr dann zunehmend unwirtschaftlich wird. Weiterhin ist bei derartigen sauerstoffarmen Gasen dafür Sorge zu tragen, daß auf alle Fälle anaerober Abbau vermieden wird, da dieser insbesondere zu Geruchsbelästigungen führt.

Die Zufuhr von Sauerstoff kann geregelt werden durch die Belüftungsintensität, die Belüftungszeit und/oder den Sauerstoffgehalt des zugeführten Gases.

Das Rühren und Belüften der Stufen B und C sowie gegebenenfalls der Stufe A kann prinzipiell mit allen dafür in der Abwassertechnik und Verfahrenstechnik bekannten Vorrichtungen erfolgen. Besonders bewährt haben sich auch beim erfindungsgemäßen Verfahren Belüftungsrührer, wie sie beispielsweise von der Firma Fuchs Gas- und Wassertechnik, Mayen, hergestellt werden.

Als Behälter kommen alle in der Abwassertechnik üblichen rührbaren und begasbaren Reaktoren in Frage, die vorzugsweise auch noch mit Schaumschneidern bzw. Schaumbegrenzern ausgerüstet sein können. Die Wärmezufuhr und Wärmeabfuhr erfolgt durch übliche Wärmeaustauscher. Unerwünschte Wärmeverluste werden durch ausreichende Isolierung der Behälter vermieden.

Das erfindungsgemäße Verfahren kann nicht nur zum Entseuchen und aeroben Stabilisieren von Klärschlamm eingesetzt werden, sondern auch für Gülle und andere organische Konzentrate, wie Hefeabfälle etc. Es hat sich gezeigt, daß das erfindungsgemäße Verfahren zuverlässig und flexibel zu einer Entseuchung und guten Stabilisierung führt, wobei gut absetzbarer Klärschlamm entsteht und ein Trübwasser guter Qualität mit nur geringer Restverschmutzung. Im Gegensatz zu nur thermophilen oder anaeroben Abbauverfahren entsteht auch keine Geruchsbelästigung. Durch die mesophile Reststabilisierung wird auch das Ammonium weitgehend nitrifiziert, wodurch der pH-Wert von höher als 8 wieder in den Neutralbereich oder etwas darunter abfällt.

## Patentansprüche

1. Verfahren zur Entseuchung und aeroben Stabilisierung von eingedicktem Klärschlamm in mehreren Stufen in einem oder mehreren wärmeisolierten und gerührten Behältern unter Zufuhr von sauerstoffhaltigem Gas, wobei
a) der anfallende auf mindestens 2 % TS eingedickte Rohschlamm, gegebenenfalls unter Vorwärmung, danach allein durch aeroben Abbau ohne Zufuhr von Fremdwärme innerhalb von 0,25 bis 4 Tagen bis an den thermophilen Temperaturbereich von > 50°C gebracht,
b) durch weiteren aeroben Abbau ohne Zufuhr von Fremdwärme von mindestens 20 Stunden bei 50 bis 55°C oder mindestens 10 Stunden bei > 55°C entseucht, dadurch gekennzeichnet, daß
c) durch aktives Abkühlen auf 25 bis 45°C und weiteren aeroben Abbau innerhalb von 1 bis 8 Tagen, vorzugsweise innerhalb von 3 bis 5 Tagen, mesophil stabilisiert wird.

2. Verfahren gemäß Anspruch 1, dadurch gekennzeichnet, daß die Stufen a), b) und c) im gleichen Behälter stattfinden.

3. Verfahren gemäß Anspruch 1 oder 2, dadurch gekennzeichnet, daß zwei oder mehr Chargen in zwei oder mehr Behältern zeitlich so versetzt gefahren werden, daß die bei Beginn der Stufe c) einer vorhergehenden Charge anfallende Wärmemenge verwendet wird zur Vorwärmung des eingedickten Rohschlamms der Stufe a) einer nachfolgenden Charge.

4. Verfahren gemäß Anspruch 1, dadurch gekennzeichnet, daß die Stufen a), b) und c) in drei getrennten hintereinander geschalteten Stufen A, B und C stattfinden, wobei die Behälter der Stufen B und C ein Mehrfaches des Behälters der Stufe A aufnehmen können.

5. Verfahren gemäß Anspruch 4, dadurch gekennzeichnet, daß die Erwärmung des Rohschlamms der Stufe A erfolgt durch Wärmeaustausch mit dem Schlamm der Stufe B.

6. Verfahren gemäß einem der Ansprüche 4 oder 5, dadurch gekennzeichnet, daß eine Charge der in 0,2 bis 2 Tagen anfallenden Menge an Rohschlamm entspricht.

7. Verfahren gemäß einem der Ansprüche 4 bis 6, dadurch gekennzeichnet, daß die mittlere Verweilzeit des Schlamms in der Stufe A 0,25 bis 2,5 Tage, vorzugsweise etwa einen Tag, in der Stufe B 1 bis 6 Tage, vorzugsweise 2 bis 3 Tage, und in der Stufe C 1 bis 8 Tage, vorzugsweise 3 bis 4 Tage, beträgt.

8. Verfahren gemäß einem der Ansprüche 1 bis 7, dadurch gekennzeichnet, daß der Anfall schwankender Mengen an eingedicktem Rohschlamm ausgeglichen wird durch entsprechende Anpassung des Füllstandes in den Behältern sowie gegebenenfalls Zu- und Abschaltung von parallelen oder in Reihe geschalteten zusätzlichen Behältern für die jeweilige Stufe.

9. Verfahren gemäß einem der Ansprüche 1 bis 8, dadurch gekennzeichnet, daß die Zufuhr von Sauerstoff geregelt wird durch die Belüftungsintensität, die Belüftungszeit und/oder den Sauerstoffgehalt des zugeführten Gases.

## Claims

1. A process for the disinfection and aerobic stabilization of concentrated sewage sludge in several stages in one or more heat-insulated mixing containers with the addition of an oxygen-containing gas, wherein
a) the sludge coming in and having been concentrated to at least 2% of dry matter is brought to the thermophilic temperature range of >50 °C, if required with pre-heating, then solely by an aerobic degradation without supplying external heat within from 2 to 4 days,
b) the sludge is disinfected by further aerobic degradation without supplying external heat at from 50 °C to 55 °C for at least 20 hours or at >55 °C for at least 10 hours,
characterized in that
c) the sludge is stabilized to be mesophilic by way of actively cooling it down to from 25 °C to 45 °C and a further aerobic degradation within from 1 to 8 days, and preferably within from 3 to 5 days.

2. The process according to claim 1, characterized in that the stages a), b) and c) are carried out in the same container.

3. The process according to claims 1 or 2, characterized in that two or more batches are run in two or more containers at different times so that the amount of heat recovered in the beginning of stage c) of a preceding batch is employed for pre-heating the concentrated crude sludge of stage a) of a subsequent batch.

4. The process according to claim 1, characterized in that the stages a), b) and c) are carried out in three separate stages A, B and C connected in series, wherein the containers of the stages B and C have capacities or several times the capacity of the container of stage A,

5. The process according to claim 4, characterized in that the heating of the crude sludge in stage A is effected by way of heat exchange with the sludge in stage B.

6. The process according to any one of claims 4 or 5, characterized in that one batch corresponds to the amount of crude sludge coming within from 0.2 to 2 days.

7. The process according to any one of claims 4 to 6, characterized in that the average residence times are
in stage A from 0.25 to 2.5 days, and preferably about one day,
in stage B from 1 to 6 days, and preferably from 2 to 3 days, and
in stage C from 1 to 8 days, and preferably from 3 to 4 days.

8. The process according to any one of claims 1 to 7, characterized in that the variation in the amounts of concentrated crude sludge to be processed can be compensated by an appropriate adaption of the filling height in the containers and, if necessary, by turning on or off additional containers connected in parallel or in series and operating for the respective stage.

9. The process according to any one of claims 1 to 8, characterized in that the oxygen supply is controlled by the intensity of aeration, time of aeration and/or the oxygen content of the gas supplied.

## Revendications

1. Procédé de décontamination et de stabilisation aérobie de boues d'épuration épaissies, en plusieurs étapes, dans un ou plusieurs réservoirs calorifugés et sous agitation, avec introduction d'un gaz contenant de l'oxygène, procédé dans lequel :
a) la boue brute produite, épaissie jusqu'à au moins 2 % de substances sèches, éventuellement avec préchauffage, est amenée ensuite jusqu'à proximité de la plage de températures thermophile de plus de 50°C, seule, par décomposition aérobie, sans introduction de chaleur étrangère, en l'espace de 0,25 à 4 jours,
b) est décontaminée par décomposition aérobie supplémentaire, sans introduction de chaleur étrangère, pendant au moins 20 heures à 50 à 55°C ou au moins 10 heures à plus de 55°C,
caractérisé en ce que
c) la stabilisation est effectuée de manière mésophile grâce à un refroidissement actif à 25 à 45°C et une décomposition aérobie supplémentaire en l'espace de 1 à 8 jours, de préférence en l'espace de 3 à 5 jours.

2. Procédé selon la revendication 1, caractérisé en ce que les étapes a), b) et c) ont lieu dans le même réservoir.

3. Procédé selon la revendication 1 ou 2, caractérisé en ce que deux charges ou plus sont amenées dans deux réservoirs ou plus avec un décalage temporel tel que la quantité de chaleur produite au début de l'étape c) d'une charge précédente est utilisée pour le préchauffage de la boue brute épaissie lors de l'étape a) d'une charge suivante.

4. Procédé selon la revendication 1, caractérisé en ce que les étapes a), b) et c) ont lieu lors de trois opérations A, B et C séparées couplées en série, les réservoirs des opérations A, B et C pouvant recevoir une quantité multiple du réservoir de l'opération A.

5. Procédé selon la revendication 4, caractérisé en ce que le chauffage de la boue brute de l'opération A effectue par échange de chaleur avec la boue de l'opération B.

6. Procédé selon une des revendications 4 et 5, caractérisé en ce qu'une charge correspond à la quantité de boue brute produite en 0,2 à 2 jours.

7. Procédé selon une des revendications 4 à 6, caractérisé en ce que le temps de séjour moyen de la boue lors de l'opération A est de 0,25 à 2,5 jours, de préférence environ un jour, de 1 à 6 jours lors de l'opération B, de préférence 2 à 3 jours, et de 1 à 8 jours lors de l'opération C, de préférence 3 à 4 jours.

8. Procédé selon une des revendications 1 à 7, caractérisé en ce que les quantités variables produites de boue brute épaissie sont équilibrées par une adaptation correspondante du niveau dans les réservoirs, ainsi qu'éventuellement par la mise en circuit ou la mise hors circuit de réservoirs supplémentaires parallèles ou montés en série pour l'opération respective.

9. Procédé selon une des revendications 1 à 8, caractérisé en ce que l'introduction d'oxygène est régulée par l'intensité d'aération, le temps d'aération et/ou la teneur en oxygène du gaz introduit.
